# EUROPEAN PATENT APPLICATION

(11) **EP 3 879 909 A1**
(43) Date of publication of application: **15.09.2021**
(21) Application number: 18939309.3
(22) Date of filing: 09.11.2018
(51) Int. Cl.: H04W 72/12, H04W 72/04

(54) **USER TERMINAL**

(71) Applicant: NTT DOCOMO, INC., Chiyoda-ku Tokyo 100-6150 (JP)
(72) Inventor: YOSHIOKA, Shohei, Tokyo 100-6150 (JP); NAGATA, Satoshi, Tokyo 100-6150 (JP); GUO, Shaozhen, Beijing 100190 (CN); HOU, Xiaolin, Beijing 100190 (CN)
(74) Representative: Hoffmann Eitle
(86) International application number: PCT/JP2018/041760
(87) International publication number: WO 2020/095457

(57) **Abstract**

A user terminal according to one aspect of the present disclosure includes: a receiving section that receives a plurality of downlink control information that indicate time units in a slot; and a control section that determines at least one of a codebook and an uplink control channel resource, the codebook being mapped with a plurality of transmission acknowledgement information for a plurality of downlink shared channels respectively scheduled by the plurality of downlink control information, and the uplink control channel resource being used to transmit the plurality of transmission acknowledgement information.

## Description

### Technical Field

The present disclosure relates to a user terminal of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A or LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

In the legacy LTE systems, a user terminal (UE: User Equipment) transmits Uplink Control Information (UCI) by using an uplink control channel (e.g., PUCCH: Physical Uplink Control Channel) or an uplink shared channel (e.g., PUSCH: Physical Uplink Shared Channel).

The UCI may include at least one of transmission acknowledgement information (also referred to as, for example, HARQ-ACK: Hybrid Automatic Repeat reQuest-ACKnowledge, ACK/NACK: ACKnowledge/Non-ACK or A/N) for a downlink shared channel (e.g., PDSCH: Physical Downlink Shared Channel), a Scheduling Request (SR) and Channel State Information (CSI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

Furthermore, it is studied for a future radio communication system (also referred to as NR below) to indicate to a user terminal a feedback (transmission) timing of transmission acknowledgement information (e.g., HARQ-ACK) for a downlink shared channel (e.g., PDSCH) and an uplink control channel (e.g., PUCCH) resource used to feed back the transmission acknowledgement information by Downlink Control Information (DCI) used to schedule the downlink shared channel.

Hence, a case also occurs where transmission timings or a plurality of PUCCH resources of a plurality of transmission acknowledgement information respectively associated with a plurality of downlink shared channels to be scheduled to different transmission durations (e.g., slots) are indicated to an identical slot. In this case, it is studied to transmit a plurality of these transmission acknowledgement information in the identical slot by using a single PUCCH resource.

However, there is a risk that, when a plurality of these transmission acknowledgement information are transmitted in the identical slot by using only the single PUCCH resource, it is not possible to flexibly control feedback (report) of a plurality of these transmission acknowledgement information, or latency occurs in feedback of part of a plurality of these transmission acknowledgement information. As a result, there is a risk that it is not possible to sufficiently satisfy a requirement of a service (e.g., Ultra Reliable and Low Latency Communications (URLLC)) for which high reliability and low latency are requested.

It is therefore one of objects of the present disclosure to provide a user terminal that can more appropriately control feedback of one or more transmission acknowledgement information.

### Solution to Problem

A user terminal according to one aspect of the present disclosure includes: a receiving section that receives a plurality of downlink control information that indicate time units in a slot; and a control section that determines at least one of a codebook and an uplink control channel resource, the codebook being mapped with a plurality of transmission acknowledgement information for a plurality of downlink shared channels respectively scheduled by the plurality of downlink control information, and the uplink control channel resource being used to transmit the plurality of transmission acknowledgement information.

### Advantageous Effects of Invention

According to one aspect of the present disclosure, it is possible to more appropriately control feedback of one or more transmission acknowledgement information.

### Brief Description of Drawings

Fig. 1 is a diagram illustrating one example of HARQ-ACK feedback.
Fig. 2 is a diagram illustrating one example of HARQ-ACK feedback according to a first aspect.
Fig. 3 is a diagram illustrating one example of a relationship between DAIs and an HARQ-ACK codebook according to the first aspect.
Fig. 4 is a diagram illustrating one example of HARQ-ACK feedback according to a second aspect.
Fig. 5 is a diagram illustrating one example of a relationship between DAIs and an HARQ-ACK codebook according to the second aspect.
Fig. 6 is a diagram illustrating one example of a schematic configuration of a radio communication system according to one embodiment.
Fig. 7 is a diagram illustrating one example of a configuration of a base station according to the one embodiment.
Fig. 8 is a diagram illustrating one example of a configuration of a user terminal according to the one embodiment.
Fig. 9 is a diagram illustrating one example of hardware configurations of the base station and the user terminal according to the one embodiment.

### Description of Embodiments

According to NR, a mechanism that a user terminal (UE: User Equipment) feeds back (also referred to as, for example, reports or transmits) transmission acknowledgement information (also referred to as, for example, Hybrid Automatic Repeat reQuest-ACKnowledge (HARQ-ACK), ACKnowledge/Non-ACK (ACK/NACK), HARQ-ACK information or A/N) for a downlink shared channel (also referred to as, for example, a Physical Downlink Shared Channel (PDSCH)) is studied.

According to, for example, NR Rel. 15, a given field value in DCI (e.g., DCI format 1_0 or 1_1) used to schedule a PDSCH indicates a feedback timing of HARQ-ACK for the PDSCH. When a UE transmits, in a slot #n+k, HARQ-ACK for a PDSCH received in a slot #n, the given field value may be mapped on a value of k. The given field is referred to as, for example, a PDSCH-to-HARQ-feedback timing indicator field.

Furthermore, according to NR Rel. 15, a PUCCH resource used to feed back HARQ-ACK for a PDSCH is determined based on a given field value in DCI (e.g., DCI format 1_0 or 1_1) used to schedule the PDSCH. The given field may be referred to as, for example, a PUCCH Resource Indicator (PRI) field or an ACK/NACK Resource Indicator (ARI) field. The given field value may be referred to as, for example, a PRI or an ARI.

A PUCCH resource mapped on each value of the given field may be configured in advance to the UE by a higher layer parameter (e.g., ResourceList in PUCCH-ResourceSet). Furthermore, the PUCCH resource may be configured to the UE per set (PUCCH resource set) including one or more PUCCH resources.

Furthermore, it is studied for NR Rel. 15 that the UE does not expect to transmit one or more uplink control channels (Physical Uplink Control Channels (PUCCHs)) including HARQ-ACKs in a single slot.

More specifically, according to NR Rel. 15, the one or more HARQ-ACKs in the single slot may be mapped on a single HARQ-ACK codebook, and the HARQ-ACK codebook may be transmitted in a PUCCH resource indicated by last DCI.

In this regard, the HARQ-ACK codebook may be configured to include a bit for HARQ-ACK that is in at least one unit of a time domain (e.g., slot), a frequency domain (e.g., Component Carrier (CC)), a spatial domain (e.g., layer), a Transport Block (TB) and a group of code blocks (Code Block Group (CBG)) that make up the TB. In addition, the CC is also referred to as, for example, a cell, a serving cell or a carrier. Furthermore, the bit is also referred to as, for example, an HARQ-ACK bit, HARQ-ACK information or an HARQ-ACK information bit.

The HARQ-ACK codebook is also referred to as, for example, a pdsch-HARQ-ACK-Codebook, a codebook, an HARQ codebook or an HARQ-ACK size.

For example, the number of bits (size) included in the HARQ-ACK codebook may be semi-statically or dynamically determined. A semi-static HARQ-ACK codebook is also referred to as, for example, a type-1 HARQ-ACK codebook or a semi-static codebook. A dynamic HARQ-ACK codebook is also referred to as, for example, a type-2 HARQ-ACK codebook or a dynamic codebook.

Which one of the type-1 HARQ-ACK codebook and the type-2 HARQ-ACK codebook to use may be configured to the UE by a higher layer parameter (e.g., pdsch-HARQ-ACK-Codebook).

In a case of the type-1 HARQ-ACK codebook, in a given range (e.g., a range configured based on the higher layer parameter), the UE may feed back an HARQ-ACK bit associated with the given range irrespectively of whether or not a PDSCH is scheduled.

The given range may be determined based on at least one of a given duration (e.g., a set of a given number of occasions for receiving candidate PDSCHs or a given number of monitoring occasions m of a PDCCH), the number of CCs to be configured to the UE or activated, the number of TBs (the number of layers or a rank), the number of CBGs per TB, and whether or not spatial bundling is applied. The given range is also referred to as, for example, an HARQ-ACK bundling window, an HARQ-ACK feedback window, a bundling window or a feedback window.

In a case of the type-1 HARQ-ACK codebook, in the given range, the UE feeds back an NACK bit even when a PDSCH is not scheduled for the UE. Hence, when the type-1 HARQ-ACK codebook is used, it is also assumed that the number of HARQ-ACK bits to be fed back increases.

On the other hand, in a case of the type-2 HARQ-ACK codebook, in the above given range, the UE may feed back an HARQ-ACK bit for a scheduled PDSCH.

More specifically, the UE may determine the number of bits of the type-2 HARQ-ACK codebook based on a given field (e.g., Downlink Assignment Index (DL Assignment Indicator (Index) (DAI) field) in DCI. The DAI field may be split into a counter DAI (cDAI) and a total DAI (tDAI).

The counter DAI may indicate a counter value of downlink transmission (a PDSCH, data or a TB) to be scheduled in a given duration. For example, the counter DAI in DCI for scheduling data in the given duration may indicate a number that is counted first in a frequency domain (e.g., CC) and then in a time domain in the given duration.

The total DAI may indicate a total value (total number) of items of data to be scheduled in the given duration. For example, the total DAI in DCI for scheduling the data in a given time unit (e.g., a PDCCH monitoring occasion) in the given duration may indicate the total number of items of data scheduled by the given time unit (also referred to as, for example, a point or a timing) in the given duration.

The UE may transmit one or more HARQ-ACK bits determined (generated) based on the above type-1 or type-2 HARQ-ACK codebook by using at least one of an uplink control channel (Physical Uplink Control Channel (PUCCH)) and an uplink shared channel (Physical Uplink Shared Channel (PUSCH)).

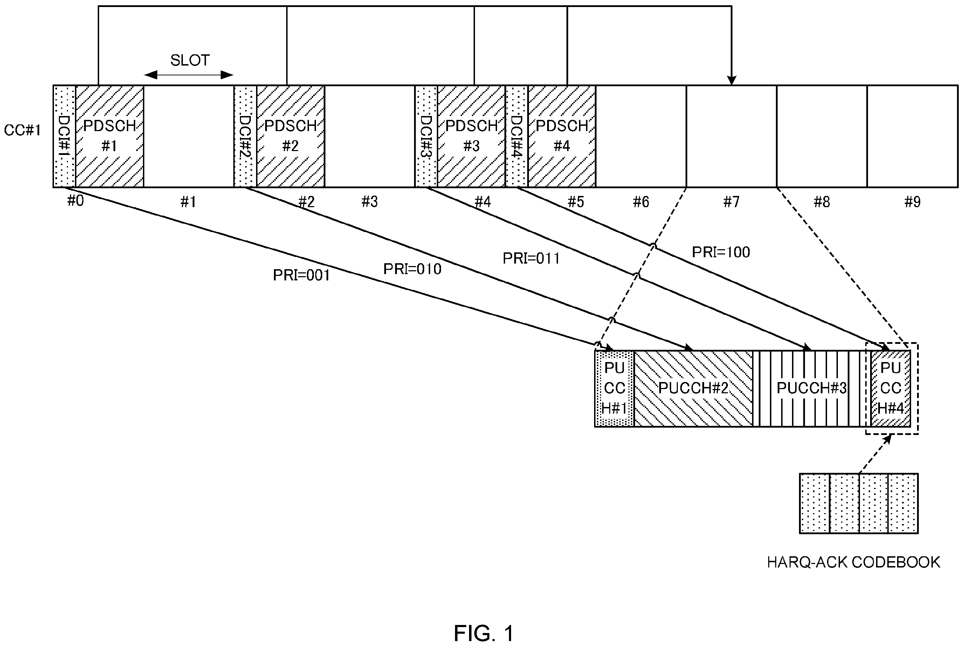

Fig. 1 is a diagram illustrating one example of HARQ-ACK feedback. Fig. 1 illustrates one example where a plurality of PDSCHs are scheduled in different slots of a single CC. For example, in Fig. 1, the UE receives PDSCHs #1, #2, #3 and #4 scheduled by DCI #1, #2, #3 and #4, respectively, in slots #0, #2, #4 and #5.

Furthermore, in Fig. 1, PDSCH-HARQ feedback timing indicator field values in the respective DCI #1 to #4 indicate an identical slot #7. On the other hand, PRI field values in the respective DCI #1 to #4 respectively indicate different PUCCH resources #1 to #4.

The UE may determine a PUCCH resource set for HARQ-ACK of N bits to be fed back in the identical slot, and transmit the HARQ-ACK of the N bits by using a PUCCH resource indicated by a PRI field value in last DCI. For example, in Fig. 1, the UE may transmit an HARQ-ACK codebook on which HARQ-ACKs of the PDSCHs #1 to #4 are mapped (included) by using the PUCCH resource #4 indicated by the PRI field value in the last DCI #4 among the DCI #1 to #4.

In Fig. 1, the HARQ-ACK codebook used to feed back the HARQ-ACKs of the PDSCHs #1 to #4 may be any one of the type-1 and the type-2.

Furthermore, a plurality of HARQ-ACK bits may be included in order first in the frequency domain and then in the time domain in the HARQ-ACK codebook. For example, HARQ-ACK bits may be included first in ascending order of CC indices and then in order of duration indices for monitoring DCI. The duration is also referred to as, for example, a monitoring occasion or a PDCCH monitoring occasion.

Thus, in Fig. 1, when a plurality of DCI including PDSCH-HARQ feedback timing indicator field values indicating an identical slot respectively schedule PDSCHs, HARQ-ACKs for the PDSCHs are mapped on an identical HARQ-ACK codebook. Furthermore, the UE feeds back the HARQ-ACK codebook by using a single PUCCH resource that indicates a PRI field value in last DCI among a plurality of DCI.

Making it possible to transmit only a single PUCCH in an identical slot (e.g., slot #7) as illustrated in Fig. 1 causes a risk that it is not possible to flexibly control HARQ-ACK report or latency occurs.

For example, in Fig. 1, the HARQ-ACK for the PDSCH #1 is transmitted in the last PUCCH #4 of the slot #7 instead of the first PUCCH #1 of the slot #7, and therefore latency of a feedback timing occurs. As a result, there is a risk that it is not possible to sufficiently satisfy a requirement of a service (e.g., Ultra Reliable and Low Latency Communications (URLLC)) for which high reliability and low latency are requested.

Hence, the inventors of the present disclosure have conceived realizing at least one of flexible control of HARQ-ACK feedback and reduction of feedback latency by making it possible to transmit one or more PUCCHs including HARQ-ACKs in a single slot.

One embodiment of the present disclosure will be described in detail below with reference to the drawings. Each of following aspects may be each applied alone or may be applied in combination.

The UE according to the present embodiment may receive a plurality of DCI that indicate time units in a slot. The UE may determine a codebook on which a plurality of HARQ-ACKs for a plurality of PDSCHs respectively scheduled by a plurality of these DCI are mapped. Furthermore, the UE may determine PUCCH resources (uplink control channel resources) used to transmit a plurality of these HARQ-ACKs.

In this regard, the "time unit" may be a time unit shorter than a slot, and include a given number of symbols (e.g., 2, 3, 4 or 7 symbols) that is smaller than 14 symbols that make up 1 slot. Furthermore, the time unit may be configured by multiply splitting a slot. For example, a time unit obtained by splitting a slot into two may be also referred to as, for example, a half slot, and may include 7 symbols. Furthermore, a time unit obtained by splitting a slot into four may be also referred to as, for example, a mini slot, and may include 3 or 4 symbols.

Furthermore, "the codebook (HARQ-ACK codebook) on which a plurality of HARQ-ACKs are mapped" may be any one of the type-1 HARQ-ACK codebook and the type-2 HARQ-ACK codebook. A case where the type-2 HARQ-ACK codebook is used will be mainly described below as one example.

### (First Aspect)

According to the first aspect, a UE controls processing (e.g., determination of an HARQ-ACK codebook and determination of at least one of PUCCH resources) related to transmission of a plurality of HARQ-ACKs for a plurality of PDSCHs respectively scheduled by a plurality of DCI, based on whether or not time units indicated by a plurality of these DCI are identical.

More specifically, when the time units indicated by a plurality of above DCI are identical, a plurality of above HARQ-ACKs may be mapped on an identical HARQ-ACK codebook. Furthermore, when the time units indicated by a plurality of DCI are identical, the UE may use a PUCCH resource indicated by a given field value (e.g., PRI field value) in specific DCI among a plurality of above DCI to transmit a plurality of these HARQ-ACKs.

### <Determination of HARQ-ACK Codebook>

In the first aspect, determination of an HARQ-ACK codebook may include at least one following step.

### Step 1:

The UE determines a monitoring occasion for a PDCCH. More specifically, the UE may determine the monitoring occasion based on at least one configuration of a CORESET and a search space.

### Step 2:

The UE detects DCI (e.g., DCI format 1_0 or 1_1) for scheduling a PDSCH in each monitoring occasion.

The UE may control grouping of the DCI based on a time unit determined based on the DCI. The time unit may be determined based on a value of a given field (e.g., PDSCH-HARQ feedback timing indicator field) in the DCI.

For example, the UE may categorize one or more DCI that indicate (derive) an identical time unit into an identical group (DCI group). Furthermore, the UE may categorize one or more DCI that indicate (derive) different time units into different DCI groups.

### Step 3:

The UE may control mapping of HARQ-ACK bits for the HARQ-ACK codebook per DCI group. More specifically, the UE may map HARQ-ACK for a PDSCH scheduled by each DCI belonging to the identical DCI group (i.e., indicating the identical time unit) on the identical HARQ-ACK codebook.

Furthermore, the UE may determine a number N (size) of HARQ-ACK bits included in the HARQ-ACK codebook based on a total DAI or an Uplink DAI (UL DAI).

### <Determination of PUCCH Resource>

In the first aspect, the UE may transmit HARQ-ACKs (or an HARQ-ACK codebook on which the HARQ-ACKs are mapped) for PDSCHs scheduled by one or more DCI by using a PUCCH resource indicated by specific DCI (e.g., last DCI) among the one or more DCI belonging to an identical DCI group.

After determining a PUCCH resource set for HARQ-ACK bits of the N bits, the UE may determine PUCCH resources in the PUCCH resource set based on a PRI field value in the specific DCI belonging to the identical DCI group. The specific DCI is as described above.

### <Specific Example>

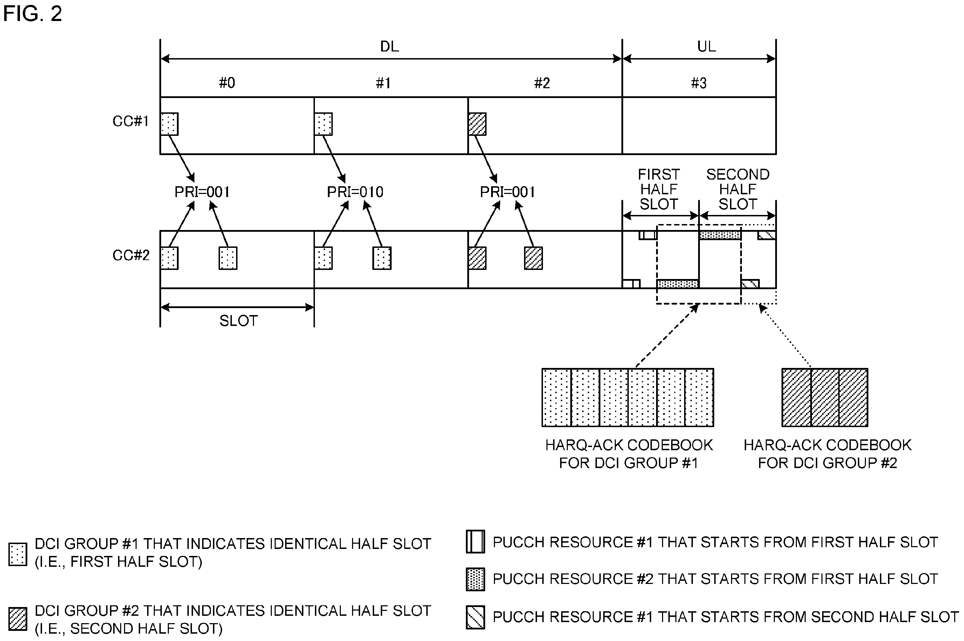

Fig. 2 is a diagram illustrating one example of HARQ-ACK feedback according to the first aspect. Fig. 2 illustrates one example where a plurality of PDSCHs are scheduled in different slots of a plurality of CCs. In this regard, Fig. 2 illustrates one example where a time unit (also referred to as, for example, an HARQ-ACK feedback granularity) used to feed back HARQ-ACK is a half slot. However, the time unit may be any duration as long as the duration is shorter than a slot.

In Fig. 2, the UE groups one or more DCI respectively used to schedule one or more PDSCHs based on time units (e.g., half slots in Fig. 2) respectively indicated by the one or more DCI. For example, in Fig. 2, six DCI that indicate a first half slot of a slot #3 are categorized into a DCI group #1. On the other hand, three DCI that indicate a second half slot of the slot #3 are categorized into a DCI group #2.

Furthermore, the UE generates an HARQ-ACK codebook per DCI group. For example, in Fig. 2, six HARQ-ACK bits for six PDSCHs scheduled by six DCI belonging to the DCI group #1 are mapped on an identical HARQ-ACK codebook. On the other hand, three HARQ-ACK bits for three PDSCHs scheduled by three DCI belonging to the DCI group #2 are mapped on an identical HARQ-ACK codebook.

In addition, Fig. 2 assumes a case where each DCI schedules a single TB. However, each DCI may schedule one or more TBs (e.g., 2 TBs), or may schedule one or more CBGs.

As illustrated in Fig. 2, a plurality of DCI belonging to an identical DCI group may indicate an identical PUCCH resource, or may indicate different PUCCH resources. For example, in Fig. 2, a PRI field value in each DCI detected in a slot #0 in the DCI group #1 indicates a PUCCH resource #1, and a PRI field value in each DCI detected in a slot #1 indicates a PUCCH resource #2. Furthermore, a PRI field value in each DCI of the DCI group #2 indicates the PUCCH resource #1.

Thus, an identical PUCCH resource is not necessarily derived based on a PRI field value in each DCI belonging to an identical DCI group. Hence, the UE may determine a PUCCH resource used to transmit an HARQ-ACK codebook associated with the identical DCI group based on a PRI field value of specific DCI belonging to the identical DCI group. The specific DCI may be last DCI belonging to the identical DCI group.

Furthermore, the specific DCI may be DCI that is detected in a specific cell belonging to the identical DCI group (or that schedules a PDSCH of the specific cell). The specific cell may be, for example, a Primary Cell (PCell) or a Primary Secondary Cell (PSCell).

For example, in Fig. 2, the UE determines the PUCCH resource #2 that starts from the first half slot indicated by each DCI of the DCI group #1 based on a PRI field value in last DCI belonging to the DCI group #1. The UE may transmit the HARQ-ACK codebook (or the six HARQ-ACK bits mapped on the HARQ-ACK codebook) of the DCI group #1 by using the PUCCH resource #2.

Furthermore, the UE determines the PUCCH resource #1 that starts from the second half slot indicated by each DCI of the DCI group #2 based on a PRI field value in last DCI belonging to the DCI group #2. The UE may transmit the HARQ-ACK codebook (or the three HARQ-ACK bits mapped on the HARQ-ACK codebook) of the DCI group #2 by using the PUCCH resource #1.

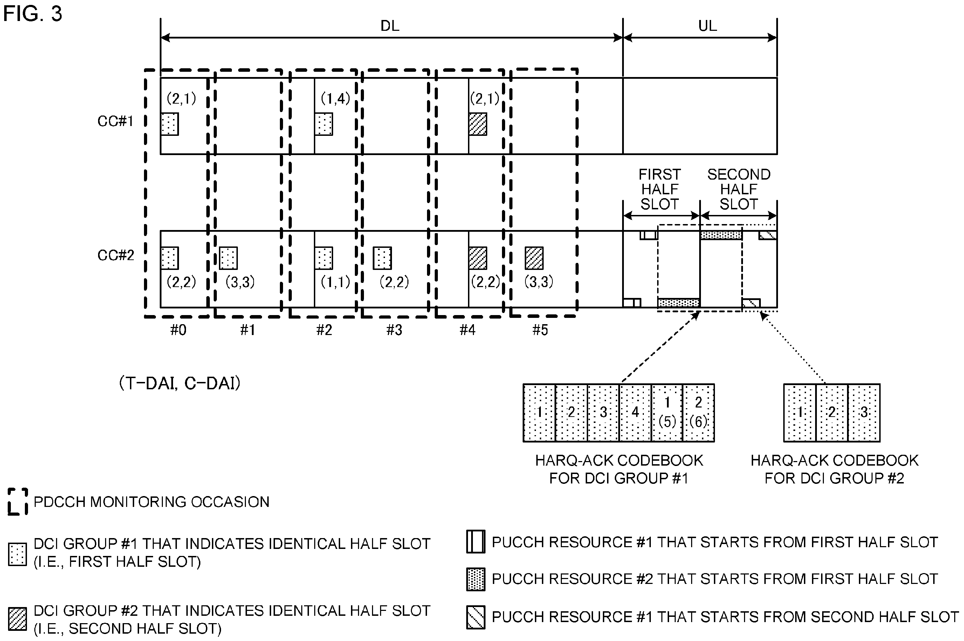

Fig. 3 is a diagram illustrating one example of a relationship between DAIs and an HARQ-ACK codebook according to the first aspect. A precondition in Fig. 3 is the same as that in Fig. 2. The relationship between the total DAI and the counter DAI indicated by a given number of bit values of a DAI field in each DCI, and an HARQ-ACK codebook will be described in detail with reference to Fig. 3.

As illustrated in Fig. 3, values of the total DAI and the counter DAI may be determined per DCI group. More specifically, the value of the total DAI may be a total number of PDSCHs (at least one of a TB and a CBG) scheduled by DCI belonging to an identical DCI group up to a current PDCCH monitoring occasion.

Furthermore, the value of the counter DAI may be a counter value of PDSCHs (at least one of a TB and a CBG) scheduled by DCI belonging to an identical DCI group up to a current PDCCH monitoring occasion. In an identical PDCCH monitoring occasion, values of the counter DAIs may be counted in ascending order of indices of CCs to which the PDSCHs are scheduled (or CCs for scheduling the PDSCHs). Furthermore, the values of the counter DAIs may be counted per at least one of the TB and the CBG.

For example, in Fig. 3, the total number of PDSCHs scheduled by DCI belonging to the DCI group #1 up to a PDCCH monitoring occasion #0 is 2. Hence, the values of the total DAIs in 2 DCI detected in the PDCCH monitoring occasion #0 may be respectively set to 2. Furthermore, the values of the counter DAIs in the 2 DCI are counted in ascending order of CC indices.

Furthermore, the total number of PDSCHs scheduled from PDCCH monitoring occasions #0 to #1 by DCI belonging to the DCI group #1 is 3 (= 2 + 1). Hence, the value of the total DAI in 1 DCI detected in the PDCCH monitoring occasion #1 may be set to 3. Furthermore, the value of the counter DAI in the 1 DCI is 3 (= 2 + 1).

Furthermore, the total number of PDSCHs scheduled from PDCCH monitoring occasions #0 to #2 by DCI belonging to the DCI group #1 is 5 (= 3 + 2). In this regard, when the total DAI is x bits, a value that exceeds an x-th power of 2 (e.g., a value that exceeds 4 in a case of x = 2) cannot be set. Hence, the values of the total DAIs in the 2 DCI detected in the PDCCH monitoring occasion #2 may be set to a value (e.g., a value " 1" obtained by performing a modulo operation on 5 by the x-th power of 2) that indicates an actual total number (6 in this case).

Similarly, when the counter DAI is x bits, the value that exceeds the x-th power of 2 (e.g., the value that exceeds 4 in a case of x = 2) cannot be set. Hence, when the counter value exceeds the x-th power of 2, the value of the counter DAI may be set to a value (e.g., a value obtained by performing a modulo operation on the counter value by the x-th power of 2) that indicates an actual counter value (5 in this case). For example, the values of the counter DAIs in the 2 DCI detected in the PDCCH monitoring occasion are set to 4 (= 3 + 1) and 1 (= a value obtained by performing a modulo operation on 5 by 4), respectively.

Furthermore, the total number of PDSCHs scheduled from PDCCH monitoring occasions #0 to #3 by DCI belonging to the DCI group #1 is 6 (= 5 + 1). Hence, the value of the total DAI in DCI detected in the PDCCH monitoring occasion #3 may be set to a value (e.g., 2 (= a value obtained by performing a modulo operation on 6 by 4)) that indicates an actual total number (6 in this case). Similarly, the value of the counter DAI in the DCI may be set to a value (e.g., 2 (= a value obtained by performing a modulo operation on 6 by 4)) that indicates an actual counter value (6 in this case).

Furthermore, the total number of PDSCHs scheduled from PDCCH monitoring occasions #0 to #4 by DCI belonging to the DCI group #2 is 2. Hence, the values of the total DAIs in 2 DCI detected in the PDCCH monitoring occasion #4 may be respectively set to 2. Furthermore, the values of the counter DAIs in the 2 DCI may be counted in ascending order of CC indices.

Furthermore, the total number of PDSCHs scheduled from PDCCH monitoring occasions #0 to #5 by DCI belonging to the DCI group #2 is 3 (= 2 + 1). Hence, the value of the total DAI in 1 DCI detected in the PDCCH monitoring occasion #5 may be set to 3. Furthermore, the value of the counter DAI in the 1 DCI is 3 (= 2 + 1).

As illustrated in Fig. 3, an order for mapping HARQ-ACK bits associated with each DCI group on an HARQ-ACK codebook for each DCI group may be determined based on a counter DAI. For example, in Fig. 3, HARQ-ACK bits associated with counter DAI values are respectively mapped on HARQ-ACK codebooks for the DCI groups #1 and #2 in ascending order of values indicated by the counter DAI values.

According to the above first aspect, it is possible to appropriately control processing (e.g., determination of an HARQ-ACK codebook and determination of at least one of PUCCH resources) related to transmission of a plurality of HARQ-ACKs for a plurality of PDSCHs respectively scheduled by a plurality of DCI based on whether or not time units indicated by a plurality of these DCI are identical.

### (Second Aspect)

According to the second aspect, a UE controls processing (e.g., determination of an HARQ-ACK codebook and determination of at least one of PUCCH resources) related to transmission of a plurality of HARQ-ACKs for a plurality of PDSCHs respectively scheduled by a plurality of DCI based on both of whether or not time units indicated by a plurality of these DCI are identical, and whether or not PUCCH resources indicated by a plurality of these DCI are identical. Differences of the second aspect from the first aspect will be mainly described.

More specifically, when time units indicated by a plurality of above DCI are identical, and given field values (e.g., PRI field values) in a plurality of above DCI are identical, the UE may map a plurality of above HARQ-ACKs on an identical HARQ-ACK codebook.

Furthermore, when time units indicated by a plurality of above DCI are identical, and given field values (e.g., PRI field values) in a plurality of above DCI are identical, the UE may use a PUCCH resource indicated by a given field value (e.g., PRI field value) in arbitrary DCI among a plurality of above DCI to transmit a plurality of these HARQ-ACKs.

### <Determination of HARQ-ACK Codebook>

In the second aspect, determination of an HARQ-ACK codebook may be configured to include at least following one step.

### Step 1:

The UE determines a monitoring occasion for a PDCCH. More specifically, the UE may determine the monitoring occasion based on at least one configuration of a CORESET and a search space.

### Step 2:

The UE detects DCI (e.g., DCI format 1_0 or 1_1) for scheduling a PDSCH in each monitoring occasion. The UE may control grouping of the DCI based on a time unit and a PUCCH resource determined based on the DCI. The time unit may be determined based on a value of a given field (e.g., PDSCH-HARQ feedback timing indicator field) in the DCI. The PUCCH resource may be determined based on a value of the given field (e.g., PRI field) in the DCI.

For example, the UE may categorize one or more DCI that indicate (derive) an identical time unit and PUCCH resource into an identical group (DCI group). Furthermore, the UE may categorize one or more DCI that indicate (derive) different time units and PUCCH resources into different DCI groups.

### Step 3:

The UE may control mapping of HARQ-ACK bits for the HARQ-ACK codebook per DCI group. More specifically, the UE may map HARQ-ACK for a PDSCH scheduled by each DCI belonging to the identical DCI group (i.e., indicating the identical time unit and PUCCH resource) on the identical HARQ-ACK codebook.

Furthermore, the UE may determine a number N (size) of HARQ-ACK bits included in the HARQ-ACK codebook based on a total DAI or an Uplink DAI (UL DAI).

### <Determination of PUCCH Resource>

In the second aspect, the UE may transmit HARQ-ACKs (or an HARQ-ACK codebook on which the HARQ-ACKs are mapped) for PDSCHs scheduled by one or more DCI by using a PUCCH resource indicated by arbitrary DCI among the one or more DCI belonging to an identical DCI group.

After determining a PUCCH resource set for HARQ-ACK bits of the N bits, the UE may determine PUCCH resources in the PUCCH resource set based on a PRI field value in the arbitrary DCI belonging to the identical DCI group.

### <Specific Example>

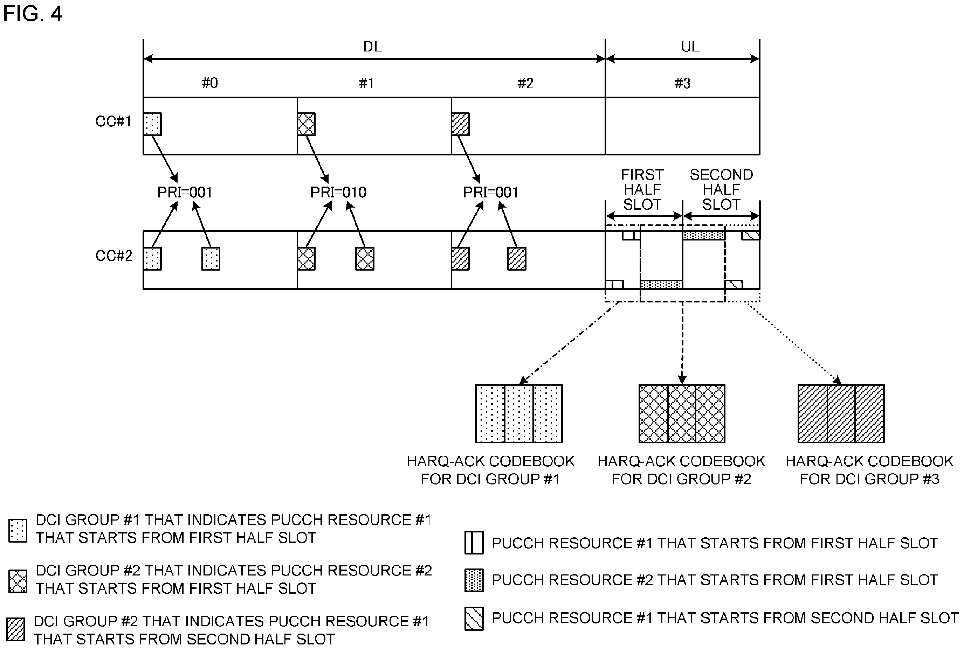

Fig. 4 is a diagram illustrating one example of HARQ-ACK feedback according to the second aspect. Fig. 4 illustrates one example where a plurality of PDSCHs are scheduled in different slots of a plurality of CCs. In this regard, Fig. 4 illustrates one example where a time unit (also referred to as, for example, an HARQ-ACK feedback granularity) used to feed back HARQ-ACK is a half slot. However, the time unit may be any duration as long as the duration is shorter than a slot.

In Fig. 4, the UE groups one or more DCI respectively used to schedule one or more PDSCHs based on time units (e.g., half slots in Fig. 4) and PUCCH resources respectively indicated by the one or more DCI.

For example, in Fig. 4, three DCI that indicate a first half slot of a slot #3 and indicate a PUCCH resource #1 are categorized into a DCI group #1. Three DCI that indicate the first half slot of the slot #3 and indicate a PUCCH resource #2 are categorized into a DCI group #2. Three DCI that indicate a second half slot of the slot #3 and indicate the PUCCH resource #1 are categorized into a DCI group #3.

Furthermore, the UE may generate an HARQ-ACK codebook per DCI group (i.e., one or more DCI that indicate an identical time unit and PUCCH resource). For example, in Fig. 4, three HARQ-ACK bits for three PDSCHs scheduled by three DCI belonging to each DCI group are mapped on an HARQ-ACK codebook for each DCI group.

As illustrated in Fig. 4, a plurality of DCI belonging to an identical DCI group may indicate an identical PUCCH resource. Hence, the UE may determine a PUCCH resource used to transmit an HARQ-ACK codebook associated with the identical DCI group based on a PRI field value of any DCI belonging to the identical DCI group.

For example, in Fig. 4, the UE determines the PUCCH resource #1 that starts from the first half slot indicated by each DCI of the DCI group #1 based on a PRI field value in one of DCI belonging to the DCI group #1. The UE may transmit the HARQ-ACK codebook (or the three HARQ-ACK bits mapped on the HARQ-ACK codebook) of the DCI group #1 by using the PUCCH resource #1.

Furthermore, the UE determines the PUCCH resource #2 that starts from the first half slot indicated by each DCI of the DCI group #2 based on a PRI field value in one of DCI belonging to the DCI group #2. The UE may transmit the HARQ-ACK codebook (or the three HARQ-ACK bits mapped on the HARQ-ACK codebook) of the DCI group #2 by using the PUCCH resource #2.

Similarly, the UE determines the PUCCH resource #1 that starts from the second half slot indicated by each DCI of the DCI group #3 based on a PRI field value in one of DCI belonging to the DCI group #3. The UE may transmit the HARQ-ACK codebook (or the three HARQ-ACK bits mapped on the HARQ-ACK codebook) of the DCI group #3 by using the PUCCH resource #1.

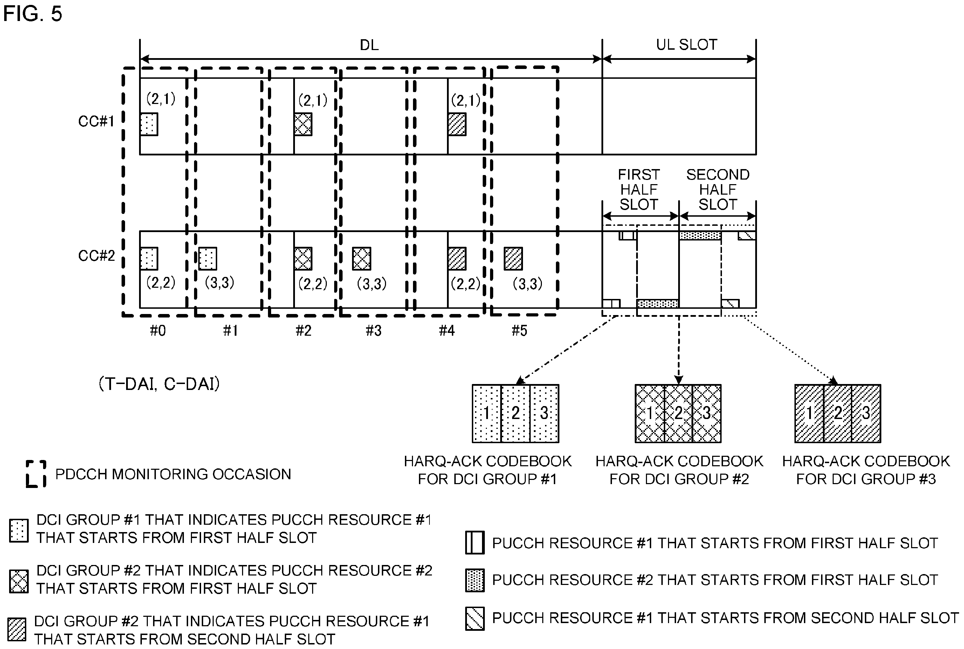

Fig. 5 is a diagram illustrating one example of a relationship between DAIs and an HARQ-ACK codebook according to the second aspect. A precondition in Fig. 5 is the same as that in Fig. 4. The relationship between the total DAI and the counter DAI indicated by a given number of bit values of a DAI field in each DCI, and an HARQ-ACK codebook will be described in detail with reference to Fig. 5.

As illustrated in Fig. 5, values of the total DAI and the counter DAI may be determined per DCI group. More specifically, the value of the total DAI may be a total number of PDSCHs (at least one of a TB and a CBG) scheduled by DCI belonging to an identical DCI group up to a current PDCCH monitoring occasion.

Furthermore, the value of the counter DAI may be a counter value of PDSCHs (at least one of a TB and a CBG) scheduled by DCI belonging to an identical DCI group up to a current PDCCH monitoring occasion. In an identical PDCCH monitoring occasion, values of the counter DAIs may be counted in ascending order of indices of CCs to which the PDSCHs are scheduled (or CCs for scheduling the PDSCHs). Furthermore, the values of the counter DAIs may be counted per at least one of the TB and the CBG.

For example, in Fig. 5, the total number of PDSCHs scheduled by DCI belonging to the DCI group #1 up to a PDCCH monitoring occasion #0 is 2. Hence, the values of the total DAIs in 2 DCI detected in the PDCCH monitoring occasion #0 may be respectively set to 2. Furthermore, the values of the counter DAIs in the 2 DCI are counted in ascending order of CC indices.

Furthermore, the total number of PDSCHs scheduled from PDCCH monitoring occasions #0 to #1 by DCI belonging to the DCI group #1 is 3 (= 2 + 1). Hence, the value of the total DAI in 1 DCI detected in the PDCCH monitoring occasion #1 may be set to 3. Furthermore, the value of the counter DAI in the 1 DCI is 3 (= 2 + 1).

Furthermore, in Fig. 5, the total number of PDSCHs scheduled from PDCCH monitoring occasions #0 to #2 by DCI belonging to the DCI group #2 is 2. Hence, the values of the total DAIs in 2 DCI detected in the PDCCH monitoring occasion #2 may be respectively set to 2. Furthermore, the values of the counter DAIs in the 2 DCI are counted in ascending order of CC indices.

Furthermore, the total number of PDSCHs scheduled from PDCCH monitoring occasions #0 to #3 by DCI belonging to the DCI group #2 is 3 (= 2 + 1). Hence, the value of the total DAI in 1 DCI detected in the PDCCH monitoring occasion #3 may be set to 3. Furthermore, the value of the counter DAI in the 1 DCI is 3 (= 2 + 1).

Similarly, the values of the total DAI and the counter DAI in each DCI of the DCI group #3 detected in the PDCCH monitoring occasions #4 and #5 may be set.

In addition, an order for mapping HARQ-ACK bits associated with each DCI group on an HARQ-ACK codebook for each DCI group is the same as that in the first aspect.

According to the above second aspect, the UE can appropriately control processing (e.g., determination of an HARQ-ACK codebook and determination of at least one of PUCCH resources) related to transmission of a plurality of HARQ-ACKs for a plurality of PDSCHs respectively scheduled by a plurality of DCI based on both of whether or not time units indicated by a plurality of these DCI are identical, and whether or not PUCCH resources indicated by a plurality of these DCI are identical.

### (Third Aspect)

The third aspect will describe a configuration of PUCCH resources in time units in a slot. A UE may assume (first example) or may not assume (second example) that the PUCCH resources are configured across a boundary of the time units.

### <First Example>

In the first example, each PUCCH resource is not configured across a boundary between time units of a slot to the UE.

In the first example, a plurality of PUCCH resources used to transmit HARQ-ACKs may be permitted to overlap or may not be permitted to overlap in an identical time unit.

When a plurality of these PUCCH resources are permitted to overlap in the identical time unit, the UE may select one of a plurality of these PUCCH resources according to a given rule. In this case, the UE may map the HARQ-ACKs respectively transmitted in a plurality of these PUCCH resources on a single HARQ-ACK codebook again, and transmit the single HARQ-ACK codebook by using a selected PUCCH resource.

According to the given rule, for example, the UE may select a PUCCH resource indicated by DCI lastly detected by the UE among a plurality of DCI respectively indicating a plurality of these PUCCH resources. Alternatively, the UE may select a PUCCH resource indicated by DCI detected in a specific cell (e.g., a primary cell or a primary secondary cell) by the UE or DCI for scheduling a PDSCH of the specific cell among a plurality of DCI respectively indicating a plurality of these PUCCH resources.

Alternatively, when a plurality of these PUCCH resources are permitted to overlap in the identical time unit, the UE may simultaneously transmit at least two of a plurality of these PUCCH resources.

### <Second Example>

In the second example, each PUCCH resource may be configured across a boundary between time units of a slot to the UE.

In the second example, a plurality of PUCCH resources used to transmit HARQ-ACKs may be permitted to overlap or may not be permitted to overlap in at least one of an identical unit and a neighboring time unit (one or more neighboring units).

When a plurality of these PUCCH resources are permitted to overlap in the one or more neighboring units, the UE may select one of a plurality of these PUCCH resources according to a given rule. In this case, the UE may map the HARQ-ACKs respectively transmitted in a plurality of these PUCCH resources on a single HARQ-ACK codebook again, and transmit the single HARQ-ACK codebook by using a selected PUCCH resource.

According to the given rule, for example, the UE may select a PUCCH resource indicated by DCI lastly detected by the UE among a plurality of DCI respectively indicating a plurality of these PUCCH resources. Alternatively, the UE may select a PUCCH resource indicated by DCI detected in a specific cell (e.g., a primary cell or a primary secondary cell) by the UE or DCI for scheduling a PDSCH of the specific cell among a plurality of DCI respectively indicating a plurality of these PUCCH resources.

Alternatively, when a plurality of these PUCCH resources are permitted to overlap in the one or more neighboring units, the UE may simultaneously transmit at least two of a plurality of these PUCCH resources.

According to the third aspect, it is possible to appropriately control transmission of HARQ-ACKs that uses PUCCH resources that are not configured or are configured across a boundary between time units in a slot.

### (Other Aspect)

A configuration of time units in a slot may be signaled to a UE or may be pre-defined.

For example, the configuration of the time units (e.g., 2 symbols, 3 or 4 symbols, 7 symbols or a half slot) may be fixedly defined by a specification.

Alternatively, the configuration of the time units may be configured by a higher layer parameter.

Alternatively, the time units may be indicated by DCI or a Radio Network Temporary Identifier (RNTI) used to scramble (CRC-scramble) a Cyclic Redundancy Check of the DCI or data.

Furthermore, one or more PUCCH resource sets may be configured to the UE per time unit in a slot, or may be configured to the UE per slot. When being configured per time unit, the PUCCH resource sets may differ per time unit. When being configured per slot, the PUCCH resource sets may be common between the time units in the slot.

### (Radio Communication System)

The configuration of the radio communication system according to one embodiment of the present disclosure will be described below. This radio communication system uses one or a combination of the radio communication method according to each of the above embodiment of the present disclosure to perform communication.

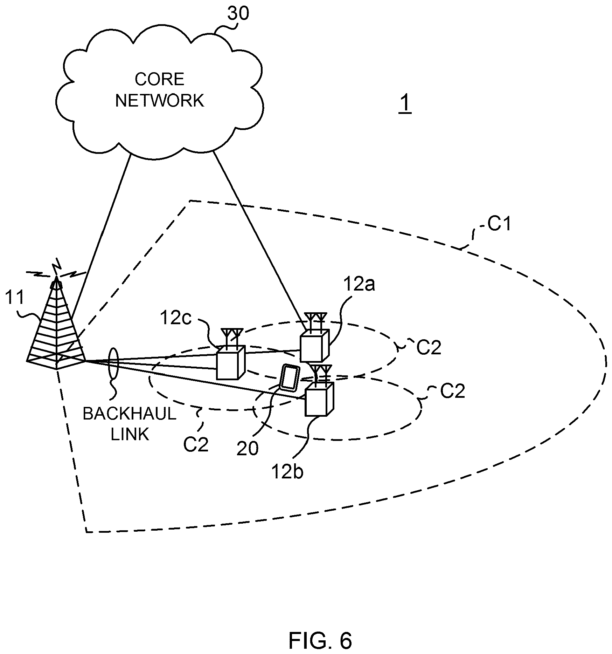

Fig. 6 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity (Multi-RAT Dual Connectivity (MR-DC)) between a plurality of Radio Access Technologies (RATs). MR-DC may include dual connectivity (EN-DC: E-UTRA-NR Dual Connectivity) of LTE (E-UTRA: Evolved Universal Terrestrial Radio Access) and NR, and dual connectivity (NE-DC: NR-E-UTRA Dual Connectivity) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NN-DC: NR-NR Dual Connectivity) where both of the MN and the SN are base stations (gNBs) according to NR).

The radio communication system 1 includes a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 6. The base stations 11 and 12 will be collectively referred to as a base station 10 below when not distinguished.

The user terminal 20 may connect with at least one of a plurality of base stations 10. The user terminal 20 may use at least one of Carrier Aggregation and Dual Connectivity (DC) that use a plurality of Component Carriers (CCs).

Each CC may be included in at least one of a first frequency range (FR1: Frequency Range 1) and a second frequency range (FR2: Frequency Range 2). The macro cell C1 may be included in the FR1, and the small cell C2 may be included in the FR2. For example, the FR1 may be a frequency range equal to or less than 6 GHz (sub-6 GHz), and the FR2 may be a frequency range higher than 24 GHz (above-24 GHz). In addition, the frequency ranges and definitions of the FR1 and the FR2 are not limited to these, and, for example, the FR1 may correspond to a frequency range higher than the FR2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (PDSCH: Physical Downlink Shared Channel) shared by each user terminal 20, a broadcast channel (PBCH: Physical Broadcast Channel) and a downlink control channel (PDCCH: Physical Downlink Control Channel) as downlink channels.

Furthermore, the radio communication system 1 uses an uplink shared channel (PUSCH: Physical Uplink Shared Channel) shared by each user terminal 20, an uplink control channel (PUCCH: Physical Uplink Control Channel) and a random access channel (PRACH: Physical Random Access Channel) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One SS may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Channel State Information (CSI), transmission acknowledgement information (that may be referred to as, for example, Hybrid Automatic Repeat reQuest ACKnowledgement (HARQ-ACK) or ACK/NACK) or a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 conveys a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

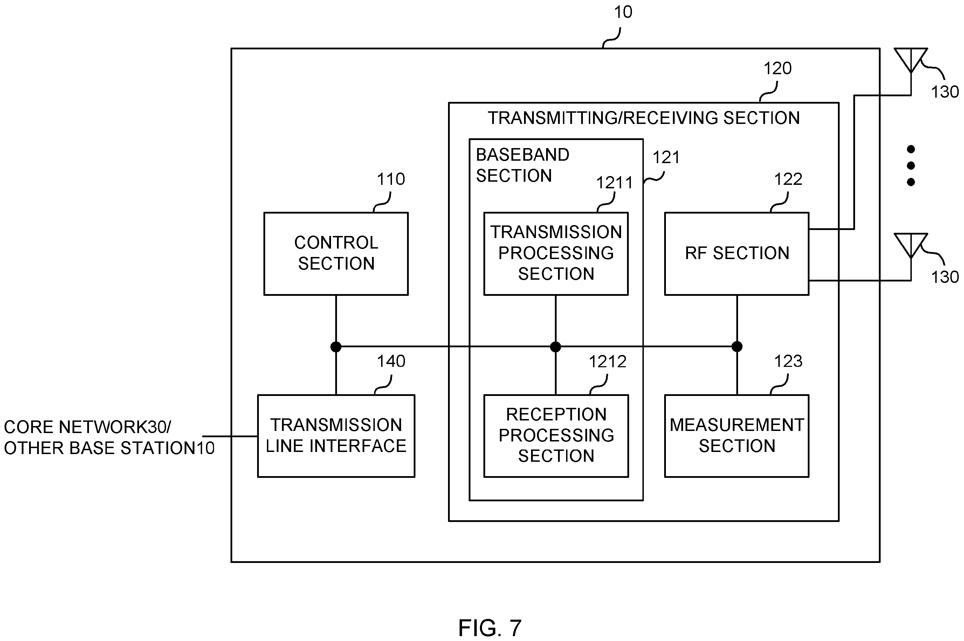

Fig. 7 is a diagram illustrating one example of a configuration of the base station according to the one embodiment. The base station 10 includes a control section 110, a transmitting/receiving section 120, transmitting/receiving antennas 130 and a transmission line interface 140. In addition, the base station 10 may include one or more of each of the control sections 110, the transmitting/receiving sections 120, the transmitting/receiving antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmitting/receiving and measurement that use the transmitting/receiving section 120, the transmitting/receiving antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmitting/receiving circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmitting/receiving antenna 130 can be composed of an antenna such an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmitting/receiving antennas 130.

On the other hand, the transmitting/receiving section 120 (RF section 122) may perform amplification and filter processing on the signal of the radio frequency range received by the transmitting/receiving antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmitting/receiving antenna 130 and the transmission line interface 140.

In addition, the transmitting/receiving section 120 receives an uplink signal (e.g., an uplink control channel, an uplink shared channel or a DMRS). Furthermore, the transmitting/receiving section 120 transmits a downlink signal (e.g., a downlink control channel, a downlink shared channel, a DMRS, downlink control information or a higher layer parameter).

More specifically, the transmitting/receiving section 120 may transmit a plurality of downlink control information that indicate time units in a slot. Furthermore, the transmitting/receiving section 120 may transmit a plurality of downlink shared channels respectively scheduled by a plurality of these downlink control information. Furthermore, the transmitting/receiving section 120 may receive a plurality of transmission acknowledgement information for a plurality of these downlink shared channels. Furthermore, the transmitting/receiving section 120 may transmit configuration information of one or more uplink control channel resources.

The control section 110 may determine at least one of a codebook on which a plurality of these transmission acknowledgement information are mapped, and an uplink control channel resource used to receive a plurality of these transmission acknowledgement information.

When the time units indicated by a plurality of these downlink control information are identical, the control section 110 may assume that a plurality of these transmission acknowledgement information are mapped on an identical codebook (first aspect).

When the time units indicated by a plurality of these downlink control information are identical, the control section 110 may use an uplink control channel resource indicated by a given field value in last downlink control information of a plurality of these downlink control information to receive a plurality of these transmission acknowledgement information (first aspect).

When the time units indicated by a plurality of these downlink control information are identical, and given field values in a plurality of these downlink control information are identical, the control section 110 may assume that a plurality of these transmission acknowledgement information are mapped on an identical codebook (second aspect).

When the time units indicated by a plurality of these downlink control information are identical, and given field values in a plurality of these downlink control information are identical, the control section 110 may use an uplink control channel resource indicated by the given field values to receive a plurality of these transmission acknowledgement information (second aspect).

The control section 110 may assume or may not assume that the uplink control channel resource is configured across a boundary of the time units in the slot.

### (User Terminal)

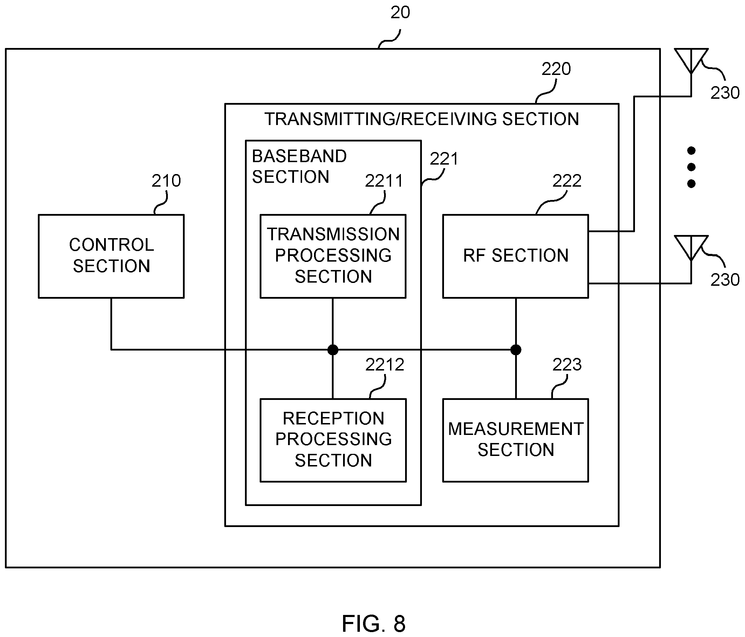

Fig. 8 is a diagram illustrating one example of a configuration of the user terminal according to the one embodiment. The user terminal 20 includes a control section 210, a transmitting/receiving section 220 and transmitting/receiving antennas 230. In this regard, the user terminal 20 may include one or more of each of the control sections 210, the transmitting/receiving sections 220 and the transmitting/receiving antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmitting/receiving antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmitting/receiving circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmitting/receiving antenna 230 can be composed of an antenna such an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmitting/receiving antennas 230.

On the other hand, the transmitting/receiving section 220 (RF section 222) may perform amplification and filter processing on the signal of the radio frequency range received by the transmitting/receiving antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform RRM measurement or CSI measurement based on the received signal. The measurement section 223 may measure received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220, the transmitting/receiving antenna 230 and the transmission line interface 240.

More specifically, the transmitting/receiving section 220 may receive a plurality of downlink control information that indicate time units in a slot. Furthermore, the transmitting/receiving section 220 may receive a plurality of downlink shared channels respectively scheduled by a plurality of these downlink control information. Furthermore, the transmitting/receiving section 220 may transmit a plurality of transmission acknowledgement information for a plurality of these downlink shared channels. Furthermore, the transmitting/receiving section 220 may receive configuration information of one or more uplink control channel resources.

The control section 210 may determine at least one of a codebook on which a plurality of these transmission acknowledgement information are mapped, and an uplink control channel resource used to transmit a plurality of these transmission acknowledgement information.

When the time units indicated by a plurality of these downlink control information are identical, the control section 210 may map a plurality of these transmission acknowledgement information on an identical codebook (first aspect).

When the time units indicated by a plurality of these downlink control information are identical, the control section 210 may use an uplink control channel resource indicated by a given field value in last downlink control information of a plurality of these downlink control information to transmit a plurality of these transmission acknowledgement information (first aspect).

When the time units indicated by a plurality of these downlink control information are identical, and given field values in a plurality of these downlink control information are identical, the control section 210 may map a plurality of these transmission acknowledgement information on an identical codebook (second aspect).

When the time units indicated by a plurality of these downlink control information are identical, and given field values in a plurality of these downlink control information are identical, the control section 210 may use an uplink control channel resource indicated by the given field values to transmit a plurality of these transmission acknowledgement information (second aspect).

The control section 210 may assume or may not assume that the uplink control channel resource is configured across a boundary of the time units in the slot (third aspect).

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

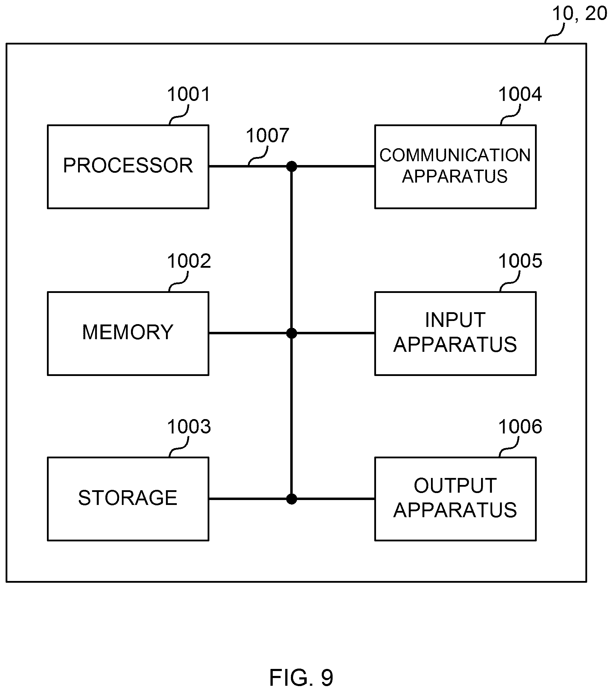

For example, the base station and the user terminal according to the one embodiment of the present disclosure may function as computers that perform processing of the radio communication method according to the present disclosure. Fig. 9 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmitting/receiving device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmitting/receiving antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS (Reference Signal), or may be referred to as, for example, a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as a Physical Uplink Control Channel (PUCCH) and a Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (LI control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI State)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmitting/receiving Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to not be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a receiving section that receives a plurality of downlink control information that indicate time units in a slot; and
a control section that determines at least one of a codebook and an uplink control channel resource, the codebook being mapped with a plurality of transmission acknowledgement information for a plurality of downlink shared channels respectively scheduled by the plurality of downlink control information, and the uplink control channel resource being used to transmit the plurality of transmission acknowledgement information.

2. The user terminal according to claim 1, wherein, when the time units indicated by the plurality of downlink control information are identical, the control section maps the plurality of transmission acknowledgement information on an identical codebook.

3. The user terminal according to claim 1 or 2, wherein, when the time units indicated by the plurality of downlink control information are identical, the control section uses an uplink control channel resource indicated by a given field value in last downlink control information of the plurality of downlink control information to transmit the plurality of transmission acknowledgement information.

4. The user terminal according to claim 1, wherein, when the time units indicated by the plurality of downlink control information are identical, and given field values in the plurality of downlink control information are identical, the control section maps the plurality of transmission acknowledgement information on an identical codebook.

5. The user terminal according to claim 1 or 4, wherein, when the time units indicated by the plurality of downlink control information are identical, and given field values in the plurality of downlink control information are identical, the control section uses an uplink control channel resource indicated by the given field values to transmit the plurality of transmission acknowledgement information.

6. The user terminal according to any one of claims 1 to 5, wherein the control section assumes or does not assume that the uplink control channel resource is configured across a boundary of the time units in the slot.
